# EUROPEAN PATENT APPLICATION

(11) **EP 1 603 322 A1**
(43) Date of publication of application: **07.12.2005**
(21) Application number: 05104372.7
(22) Date of filing: 24.05.2005
(51) Int. Cl.: H04N 1/44

(54) **Controlling document processing on the basis of user fingerprints**

(30) Priority: 03.06.2004 EP 04076622
(71) Applicant: Océ-Technologies B.V., 5914 CC Venlo (NL)
(72) Inventor: Slijp, Dion F., 6523 RP Nijmegen (NL); Jager, Jodocus F., 6538 ZK Nijmegen (NL)
(74) Representative: van Meeteren, Arend Anthonie

(57) **Abstract**

A method of controlling document processing in a networked system including a digital image reproduction device for document processing, said device having a local user interface unit including a fingerprint input unit, a user workstation, and a management unit for managing a dynamic set of logical storage spaces for digital image files, each storage space dedicated to a respective user of the system and being dynamically maintained for storing image files of that user, for storing print and/or scan files.

The method comprises detecting a user entering a fingerprint at the fingerprint input unit, and, in response,
- identifying the user from the fingerprint entered,
- accessing one of the logical storage spaces in accordance with access rights of the user as identified, and
- automatically and without requiring any further user interaction initiating a document processing workflow related to said accessed logical storage space.

In a printing workflow, a print file is retrieved from the logical storage space of the user, while in a scanning workflow, a scan file is generated and stored in the logical storage space of the user.

## Description

The invention relates to a method of controlling document processing in a networked system including a digital image reproduction device for document processing, said device having a local user interface unit including a fingerprint input unit, at least one user workstation, and a management unit for managing a dynamic set of logical storage spaces for digital image files, each storage space dedicated to a respective user of the system and being dynamically maintained for storing image files of that user, the method comprising:
processing documents in the digital image reproduction device, including storing a digital document in or retrieving a digital document from, a respective one of the logical storage spaces, in response to a user action at the local user interface unit of the device.

The invention further relates to a computer program product a system implementing the invention.

A method of controlling document processing in a networked system as described in the preamble is known from US 6,545,769. The system includes an image reproduction apparatus, workstations for users for processing digital documents, and a network for connecting the digital sheet processing apparatus and the workstation. The digital image reproduction apparatus including a scanner unit, a printer unit, a memory, a user interface including an operator control unit integrated in the apparatus and provided with an input device and a display for the user to give operator control commands to the apparatus, a network connection unit for coupling to the network for the purpose of communication with a digital environment including at least a number of the workstations of users and a management unit, which management unit maintains a dynamic set of logical storage spaces in the memory, each allocated to a specific user. A logical storage space is allocated to a user for as long as there are print or scan files of that user present in the apparatus, i.e., if a user does not have any files, there is no logical storage space allocated to him. The management unit, when receiving from a said user's workstation a digital data file for printing, stores the file in the logic storage space (if there is one) of the relevant user or dynamically allocates a logical storage space to the user and stores the file therein, and passes the file for printing to the printer unit only on a command from the operator control unit, which command identifies the relevant file, and also, on receipt from the operator control unit of an order for scanning such job being provided with a user identification, stores the data generated by the scanner unit in the existing or dynamically allocated logical storage space of the relevant user and passes it to a workstation of the relevant user only on a command from the latter workstation, which command identifies the relevant file. Other files, such as sets of adjustment parameters for printing or scanning processes, can also be stored in the logical storage spaces.

In the known system, when a user arrives at the operator control unit, he has to identify the relevant printing or scanning job by selecting the respective logical storage space and accessing it, select the relevant print job, and operate the print key. Printing jobs thus require several actions, which, moreover, must be done accurately.

It is an object of the invention to provide a method and apparatus for rapidly and conveniently processing jobs, so that a user is kept at the apparatus for a time as short as possible and is not bothered by accurate procedures.

According to a first aspect of the invention the object is achieved in that the method as described in the opening paragraph comprises: detecting a user entering a fingerprint at the fingerprint input unit, and, in response, identifying the user from the fingerprint entered, accessing one of the logical storage spaces in accordance with access rights of the user as identified, and automatically and without requiring any further user interaction initiating a document processing workflow related to said accessed logical storage space.

According to a second aspect of the invention the object is achieved with a computer program product for performing the method.

According to a third aspect of the invention the object is achieved with a document processing system comprising: a digital image reproduction device for document processing, said device having a local user interface unit including a fingerprint input unit, a management unit for managing a dynamic set of logical storage spaces for digital image files, each storage space dedicated to a respective user of the system and being dynamically maintained for storing image files of that user, said management unit also being operative for controlling processing documents in the digital image reproduction device, including storing a digital document in or retrieving a digital document from, a respective one of the logical storage spaces, in response to a user action at the local user interface unit of the device, which is characterized in that the management unit, in reaction to detecting a user entering a fingerprint at the fingerprint input unit: identifies the user from the fingerprint entered, accesses one of the logical storage spaces in accordance with access rights of the user as identified, and automatically and without requiring any further user interaction initiates a document processing workflow related to said accessed logical storage space.

It is to be understood that the term "fingerprint" may refer, not only to the actual pattern of lines in a fingerprint, but also to a set of parameter values derived from the fingerprint pattern by a suitable algorithm. Such a set of parameter values is also referred to by the term "fingerprint data" hereinafter.

In an embodiment of the present invention, the step of identifying a user includes looking up a user identification in a database of users, containing information for relating user fingerprints with user identifications.

The measures have the following effect. When the user arrives at the digital document processing apparatus, the user identifies himself (herself) by operating the fingerprint unit. The fingerprint entered at the fingerprint unit, in combination with respective user fingerprint data and access rights, e.g. stored in a user database, allows immediate access to a respective logical storage space, and a document processing workflow related to said accessed logical storage space is automatically initiated. Both the accessed logical storage space and the initiated workflow may depend on preferences included in the access rights related to the fingerprint offered. It is to be noted that the user database and/or the logical storage spaces may be implemented as a function within the digital document processing apparatus, or within a separate device coupled to the system, e.g. a server coupled to the network. Furthermore the owner of the logical storage space may be the user as identified, but may also be different from the user as identified, whereas the user as identified is allowed access according to said access rights. For example the owner may be a colleague, boss or secretary of the user, but also a department or company may be owner of a logical storage space. The advantage of the measures is that the amount of user input for operating the digital document processing apparatus is significantly reduced, while augmenting the flexibility of controlling the document processing workflow.

The invention is also based on the following recognition. When designing printing or scanning devices for business purposes it is important that functions of such devices are easily accessible. Although it may be known to identify a user by a fingerprint, such act is commonly associated with security. Also for security reasons, or for individual control, print jobs might be provided with fingerprint data. For instance, US 2001/0016912 A1 discloses a network printing system in which a print job is provided with the fingerprint data of the user, derived from a fingerprint scan at the workstation, and is then submitted to a printer. Then, the user walks up to the printer, inputs a print instruction and authenticates himself by entering his fingerprint there, whereupon the printer retrieves the print data and prints the job. Thus, the user is required to perform several actions in order to have his print job printed.

Further, a direct insertion of fingerprint data into a print job as in this system, however, may also lead to additional difficulties in operational use, e.g. requiring a fingerprint input unit at the workstation. Moreover, this system does not include the concept of user-dedicated logical storage spaces, in which a plurality of print jobs and scan jobs may be collected until the user handles them at a moment that convenes him.

EP 1 120 701 A1 discloses another fingerprint-protected printer system, in which a user must enter his fingerprint in order to get access to the stored print jobs. This system requires the user to perform several actions to have his jobs printed, because having been admitted to the system, the user is presented with a list of print jobs from which he must select one and give a print command.

The inventors of the present invention have realised that requiring a fingerprint entry at the digital document processing apparatus, is sufficient for effectively controlling the document processing workflow, especially when the fingerprint is combined with access rights for accessing a logical storage space.

In an embodiment the method includes creating a print job related to a digital document at a workstation, including, in the print job, a user identification, transferring the print job to the digital image reproduction device, storing the print job in a logical storage space dedicated to the user identification. In this embodiment the document processing workflow includes detecting the print job in the accessed logical storage space and executing the print job in the digital image reproduction device.

The user identification that is included identifies the user of the workstation as the owner of the print job, and determines storing the print job in a specific one of the logical storage spaces, usually the logical storage space assigned to the user, or to his department, etc. The user identification is related to the fingerprint to be entered in that at least the specific one of the logical storage spaces is to be accessed at the digital document processing apparatus via the fingerprint. In addition further parameters may be included in the user identification, e.g. access rights, type of printing job, priority, etc. The document processing workflow includes detecting the print job in the logical storage space that has been accessed according to the fingerprint of the user at the digital document processing apparatus. This has the advantage that a user's print job created at a workstation will be automatically executed as soon as the user starts the workflow by entering his fingerprint at the digital document processing apparatus, i.e. after the user has been identified based on the fingerprint and the user database.

In a specific embodiment, the document processing workflow includes automatically selecting print jobs in the accessed logical storage space, that have not yet been executed, and executing the selected print jobs in the digital image reproduction device. The concept of logical storage spaces makes it possible to collect a plurality of jobs and then handle these jobs collectively at one moment. Also, jobs are not automatically erased after processing, but are kept for further handling until they are deleted actively or after a predetermined timeout. However, in most situations a user will only want to print his newly submitted print jobs. The present invention helps him by selecting and printing only the new jobs.

In an embodiment of the method the document processing workflow includes scanning a physical document entered in a scanner unit of the digital document processing apparatus and storing an image file generated in the scanning in the accessed logical storage space. This has the effect that the image file is immediately stored in the logical storage space of the user as identified by the fingerprint. This has the advantage that there is no need for the user to open his logical storage space via commands at the user interface, but only his fingerprint is needed. In a particular embodiment of the method the document processing workflow includes detecting a status of the scanner unit, the status indicating the presence of a document to be scanned, and subsequently scanning the document. This has the advantage that the user may first enter his documents in the scanner unit, and subsequently enter his fingerprint.

In an embodiment of the method the document processing workflow includes opening said accessed logical storage space on a display of the user interface of the digital document processing apparatus, and offering, via the user interface, a set of workflow options. This has the advantage that the user has an overview of jobs stored in his logical storage space, and further workflow options, which may be dependent on the access rights and preferences of the user as identified. One of such options would be a selective printing option, in which any print job in the storage space may be printed individually and with selected settings.

In an embodiment of the method the set of workflow options includes an authorize option for setting the access rights of a different user to said accessed logical storage space on the user interface by entering a fingerprint of the different user at the fingerprint unit. This has the advantage that the user may easily authorize a different person, e.g. a secretary for performing his printing jobs. Note that the person thus authorized may use a special finger for accessing the logical storage space of a different owner, e.g. the secretary may use a different finger for each one of the persons she is working for.

In an embodiment of the method the set of workflow options includes an option for accessing, according to access rights of the user as identified, one of the logical storage spaces of an owner that is different from the user as identified. The user may access a different storage space after entering his fingerprint if the access rights assigned to the user allow such access. The access rights may be stored in the user database, and for example provide access to a logical storage space of specific different owner, such as a secretary accessing the logical storage space of the boss, or a logical storage space of a general owner, such as the department or the company, which may contain documents of a public nature, such as announcements or a joke of the day.

In an embodiment the method comprises detecting a second user entering a fingerprint at the fingerprint input unit, and, in response, identifying the second user from the fingerprint entered, accessing, according to combined access rights of the users as identified, a secure logical storage space, and initiating a document processing workflow related to the secure logical storage space.

The effect of requiring the second fingerprint is that the any actions related to the secure logical storage space can only be executed when the second fingerprint is entered in addition to the original fingerprint. This has the advantage that highly confidential material can be protected from easily being printed.

In an embodiment of the method one of several different document processing workflows is automatically selected and initiated in reaction to detection of fingerprints of different fingers of one user. This has the advantage that the user may use different fingers for identifying himself. In a particular embodiment of the method the said accessing one of the logical storage spaces, or the document processing workflow, is dependent on the selected finger. This has the advantage that the user may immediately affect the selection of the logical storage space or the workflow, e.g. for immediately printing his emails with a specific finger, or printing a print job of a colleague or boss.

When a user who is unknown to the system enters his fingerprint at the image reproduction device, the method includes an easy procedure for entering the user and his fingerprint in the database by simply asking him to identify himself. In an embodiment wherein the user database is kept at a different location, e.g. in a server, a new user may be entered by a procedure comprising the steps of: at a sending station (i.c. the server), generating a personal identification code and personal identification code verification data for a user, transferring the personal identification code verification data to the digital image reproduction device, requesting, via the user interface of the digital image reproduction device, to enter the personal identification code, and if the personal identification code as entered corresponds to the personal identification code verification data as transferred, subsequently transferring fingerprint data based on a fingerprint of the user entered at the fingerprint input unit back to the sending station for storage.

In an alternative embodiment of the method, fingerprint data may be stored preliminarily in a workstation and be embedded as a user identification in a print job, when it is transmitted to the printer. The management unit of the printer then opens a logical storage space dedicated to this particular fingerprint data. The relevant user may now walk up to the printer and input his fingerprint. In reaction, the management unit accesses the relevant logical storage space, retrieves the newly-arrived print jobs and prints them automatically. In this embodiment, a user database is not necessary. The same procedure for entering new users as described immediately above may also be used in this case.

Further preferred embodiments of the device according to the invention are given in the appended claims, disclosure of which is incorporated herein by reference.

These and other aspects of the invention will be apparent from and elucidated further with reference to the embodiments described by way of example in the following description and with reference to the accompanying drawings, in which
Figure 1 shows an apparatus for processing documents,
Figure 2 shows a diagram of the constituent parts of a document processing apparatus in a networked system,
Figure 3 shows a method of controlling document processing in a networked system,
Figure 4 shows a controlled workflow in a document processing apparatus, and
Figure 5 shows a method of entering new fingerprint data in a remote computer.

The Figures are diagrammatic and not drawn to scale. In the Figures, elements which correspond to elements already described have the same reference numerals.

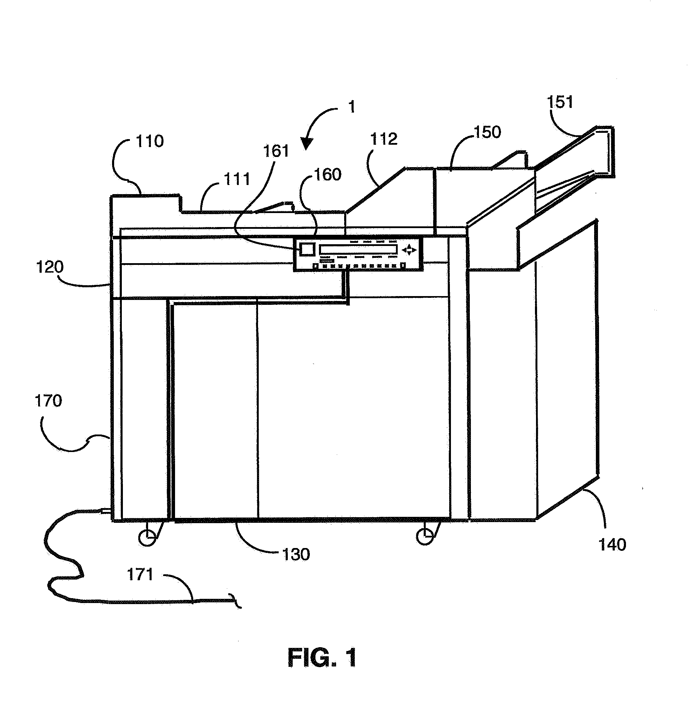

Figure 1 shows an apparatus 1 for processing documents, on which the different parts are separately shown in diagram form. The documents are usually paper documents, but may include any type of sheets for carrying information, e.g. overhead sheets, books, drawings, etc.

The apparatus has a printer unit 130 which includes an electro-photographic processing section known per se, in which a photoconductive medium is charged, exposed via an LED array in accordance with digital image data, and is developed with toner powder, whereafter the toner image is transferred and fixed on an image support, usually a sheet of paper. A stock of image supports in different formats and orientations is available in a supply section 140. The image supports with the toner image are transported to the finishing and delivery section 150, which if necessary collects them into sets and staples them and then deposits them in the delivery tray 151.

The apparatus for processing documents may be a printer only, but preferably is a multi-functional device further including scanning, copying or faxing functions, e.g. a versatile copier. A document feeder 110 is provided with an input tray 111 for the introduction of a stack of documents, a transport mechanism (not shown) for transporting the documents one by one along a scanner unit 120, and a delivery tray 112, in which the documents are placed after scanning. The scanner unit 120 includes a flat bed scanner provided with a glass platen on which an original document can be placed, a CCD array and an imaging unit having a movable mirror and lens system for imaging the document on the CCD array. In these conditions, the CCD array generates electrical signals which are converted into digital image data in manner known per se.

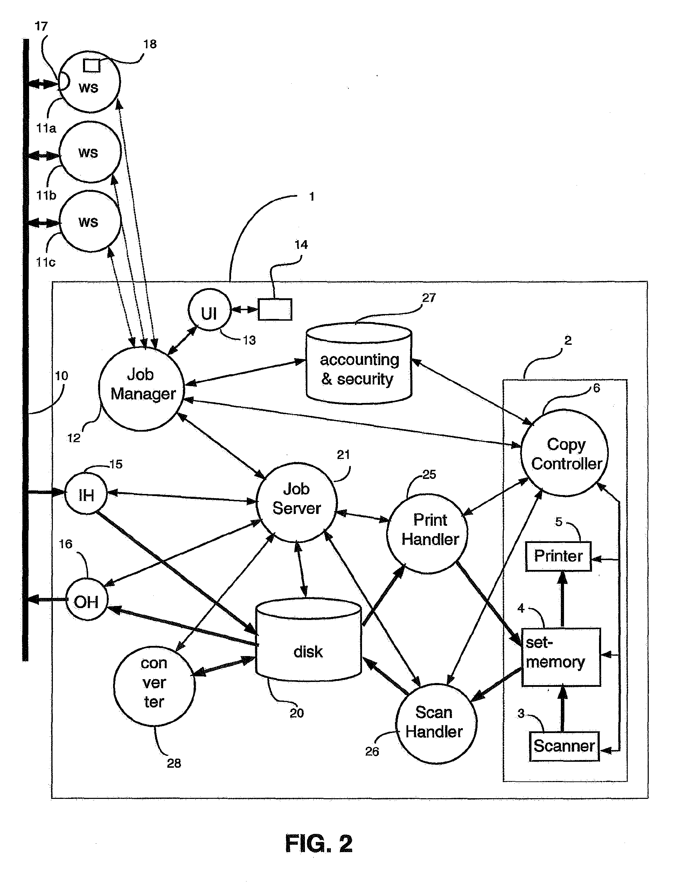

The control unit of the apparatus is shown diagrammatically by reference 170, and explained in more detail in subunits 12, 20, 21, 25, 26, 27, 28 with reference to Figure 2. A cable 171 may connect the control unit 170 via a network unit 15,16 to a local network 10 (shown in Figure 2). The network may be wired, but may also be partly or completely wireless.

The apparatus has a user interface, for example including an operator control panel 160 provided on the apparatus for operation thereof. The user interface may be provided with a display and keys. According to the invention the user interface has a fingerprint unit 161 which is sensitive to applying a fingerprint of a user, and provides an electronic signal representing the patterns constituting the fingerprint. The fingerprint unit and ways of deriving an electronic fingerprint pattern are known as such. The operation of the fingerprint unit for controlling the document processing workflow is described below.

Figure 2 shows a diagram of the constituent parts of a document processing apparatus in a networked system. In Figure 2 control connections are indicated by means of thin arrows and data transport connections by means of thick arrows. The apparatus 1, a multi-functional copier, comprises a basic unit 2 which contains a scanner unit 3, a printer unit 4, a set memory 5 and a control unit 6 for these units, hereinafter termed the CopyController. The basic unit 2 contains the units and functions required for making a simple copy. During the scanning of an original document, the scanner 3 generates digital image data and stores them in the set memory 4, whereafter the printer 5 reads out the image data from the set memory 4 and prints them on an image support, usually a sheet of paper. This process is controlled by the CopyController 6. The set memory 4 in this description may also include image processing functions, although this is not essential to the present invention and is therefore not explained further.

The apparatus 1 also includes a number of units required to print digital image data which are fed via a local network 10 from a network environment, and for exporting digital image data generated by the scanner 3 to the network environment via the same local network 10. The network system or environment as used here includes one or more workstations 11 a, 11 b, 11 c, on which a program is operative for communication with the apparatus according to the invention, and which are also connected to the local network 10. In addition one or more server stations may be coupled to the networked system, and provide central services, such as storing user data or access rights as explained below.

The apparatus 1 is provided with a management unit 12, hereinafter referred to as the: JobManager, which manages the document processing processes and also updates an administration system for all the copying, scanning and print jobs present, a Userlnterface UI 13 provided with an operator control panel on the apparatus housing, with a display and keys for operation of the apparatus 1, and a fingerprint unit 14 for entering user fingerprints. Further the apparatus has a network unit including an InputHandler 15 for receiving and transmitting digital data reaching the apparatus via the network 10 from the network environment and an OutputHandler 16 for sending digital data via the network 10 to the digital environment. The JobManager 12 is logically connected to the workstations 11 a-c indicated diagrammatically by direct broken-line arrows.

The apparatus 1 may have a storage unit 20 formed by a high-capacity hard disk, a unit 21 hereinafter referred to as a JobServer for managing the data files on the storage unit 20 and for controlling the processing processes. The electronic control of the apparatus may further include a control unit 25 hereinafter referred to as a PrintHandler, which is dedicated to controlling a printing process, and a control unit 26 hereinafter referred to as a ScanHandler, which is dedicated to controlling a scanning process, an accounting and security unit 27, which inter alia manages the authorization of users and access codes, a conversion unit 28 for converting digital data files to different formats. Note that these functions may also be centrally accommodated in a server station.

The networked system provides a dynamic set of logical storage spaces assigned to owners for storing document processing items such as print jobs or scan jobs. The logical storage space for a user, also called a mailbox, provides a temporary storage for his jobs. Note that the jobs may be deleted after execution, or may be maintained for later use. The logical storage space may be accommodated in the apparatus, e.g. by the JobManager 12 and physically storing the jobs on the storage unit 20, or may be accommodated elsewhere in the system, e.g. on a server station. The logical storage space is a data space that is temporarily assigned to a user as long as there are jobs to be stored for that user, e.g. print jobs sent to a specific printer. As soon as all jobs have been executed and/or removed, the mailbox is deleted.

The workstation 11 a has a network unit 17 for communicating via the network 10 for connecting the workstation to the digital document processing apparatus 1. Further the workstation has a control unit 18 for creating a print job related to a digital document at the workstation. Digital data files which are sent to the apparatus 1 via the network for printing may be of a direct printing type, i.e. jobs to be printed without further action on the part of an operator at the apparatus. Preferably jobs are of a controlled processing type, which are entered via the networked system into the logical storage space of the user and not executed until an operator request at the apparatus. The type of job is determined at the workstation of the user, and is apparent from an attribute added to the data transferred. Handling of controlled processing jobs, and accommodating the logical storage spaces for users, is extensively described in the document US 6,555,769 as mentioned in the introduction. According to the invention, in the print job a user identification is included related to a fingerprint and a user database as explained below.

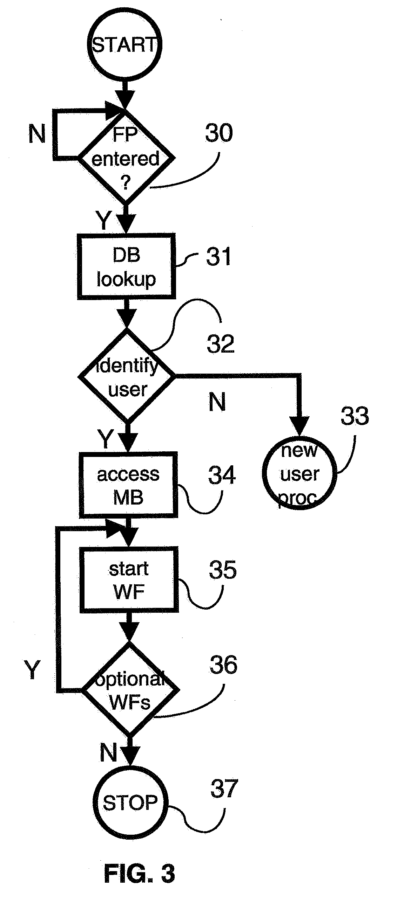

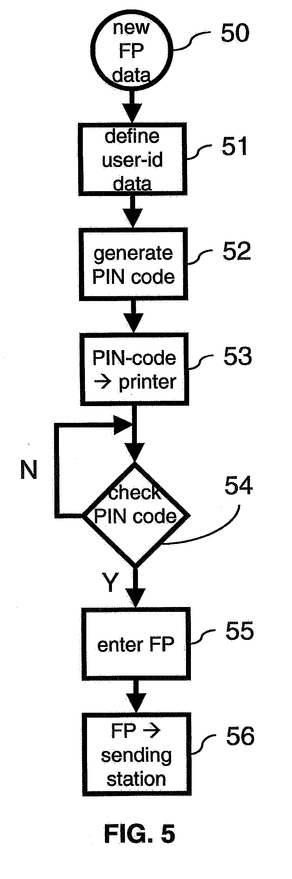

Figure 3 shows a general method of controlling document processing in a networked system in accordance with the present invention. The networked system has been described above with reference to figure 2. The method has the following steps. In a first step 30 entry of a fingerprint on a fingerprint unit of the user interface of the apparatus for document processing is awaited. Subsequently, in response to a fingerprint from the user at the fingerprint input unit, in step 31 the fingerprint pattern is matched to user fingerprint data available in a user database. Note that the actual fingerprint pattern may first be converted into a set of parameter values, and that in actual fact these data are further used. In step 32 it is decided if the user can be identified based on the fingerprint entered and the fingerprint data available. If no identification is possible, the user may be a new user and a dedicated new user routine 33 may be started as explained with Figure 5.

Assuming the user has been identified in step 32, subsequently in step 34 the respective logical storage space (mailbox) of the user is accessed. Note that alternatively a logical storage space of a different owner may be accessed according to access rights of the user as identified as explained below. Next, in step 35 a document processing workflow is initiated related to the accessed logical storage space. In particular the contents of the logical storage space are analyzed, and jobs are executed according to workflow settings for the respective jobs. For example a scan job may be executed according to preferences of the user, or print jobs may be executed according to print settings as attributed to the print jobs. The newest print job may be automatically started as soon as the mailbox is opened. Note that the user may use different fingers having different preferences, e.g. an index finger for a default workflow that automatically prints a single copy of all pending (not yet printed) print jobs, and a middle finger for a workflow that does not automatically print but only opens the mailbox. As part of the workflow the user may have the option to further select another workflow via the user interface in step 36. Several examples of the workflow and further options are given below. Finally, as indicated by step 37, when the user has finished his jobs, he may actively terminate the workflow and close his logical storage space, or the logical storage space may be closed by a timeout function or a next user's fingerprint input.

Before starting the workflow at the document processing device the user may create a print job related to a digital document, a scan job or other jobs at his workstation. The job includes a user identification, which user identification corresponds to entries in the user database connected to fingerprint data of a fingerprint to be entered at the digital document processing apparatus. For example the user identification may be a unique number, or a digital signature. Note that the user database contains a corresponding unique number or decoding key for linking the user identification attached to a job to the user data including the fingerprint data.

Normally, the user identification is automatically included in the print job in the printer driver of the workstation, or in a print manager software program. The fingerprint data may be retrieved from the Windows registry (in a user specific folder of the registry). A registration process may be triggered if no fingerprint data is available.

Subsequent to the creation the print job is transferred to one of the logical storage spaces via the network. Note that as a default the jobs will be stored in the logical storage space of the user at a selected or default document processing device, but alternatively the user may select to transfer the job to the logical storage space of a different owner, e.g. his secretary.

The above assumes that the fingerprint data for verifying the user's fingerprint are stored in a database in combination with the user's identification data. However, alternatively or additionally, the fingerprint data itself may be included in jobs sent to the printer, as a fictitious user name, and stored there in a logical storage space dynamically made for this special "user name". The fingerprint data as included in the job may be entered or stored locally at the workstation, or retrieved by the workstation from the user database. For executing, the jobs within this logical storage space may be accessed or selected by matching a fingerprint entered at the document processing apparatus with the fingerprint data included in the jobs. The subsequent workflow at the apparatus is controlled according to the fingerprint entered and the logical storage space accessed via that fingerprint, and optionally according to the preferences coupled to that fingerprint data in the job.

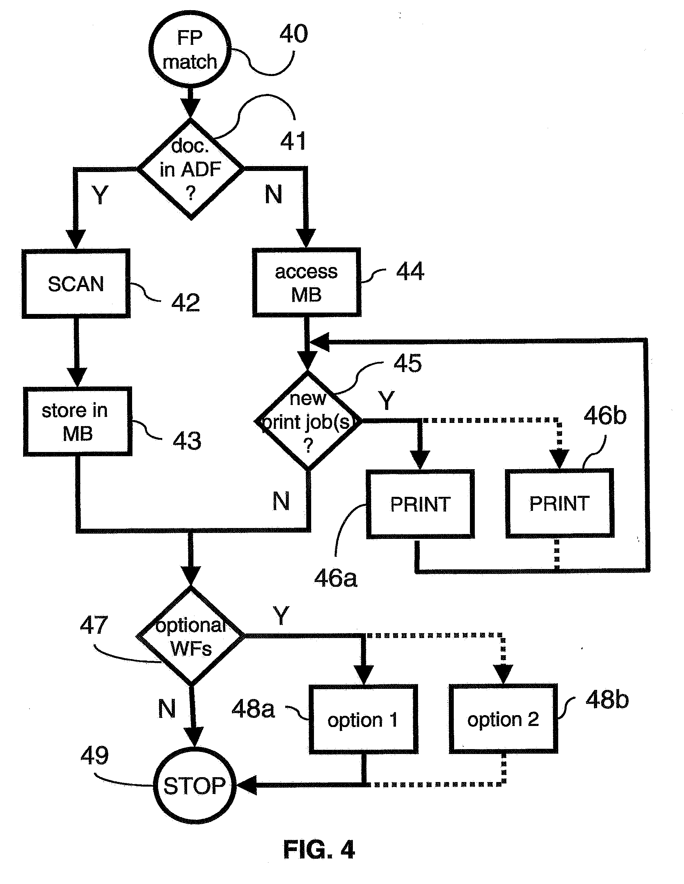

Figure 4 shows a controlled workflow in a document processing apparatus. The start of the workflow at the document processing apparatus, as indicated in step 40, is initiated by entering a fingerprint and matching the fingerprint to fingerprint data in a user database as explained above with Figure 3. The digital document processing apparatus usually is able to copy and scan documents. Original documents are entered in an automatic document feeder of a scanner unit of the digital document processing apparatus. In a step 41 a status of the scanner unit is detected, the status indicating the presence of a document to be scanned in the automatic document feeder. If so, the document or documents are subsequently scanned, and a digital image file is created in step 42. In step 43, the image file generated by scanning is stored in the logical storage space that has been opened for the user. The image files created may automatically be placed in the logical storage space of the user as identified, or the user may be offered, for storing the image file, the option to select a particular logical storage space to which he has access rights.

If no documents need scanning (i.e. no documents present in the document feeder), the workflow proceeds by selectively accessing one or more logical storage spaces in step 44. The selective access of the mailbox is based on the access rights of the user as identified, which are stored in the user database, and may depend on the selected finger as explained above. Within the accessed mailbox one or more print jobs or other processing jobs may be present, and are detected in step 45. New (i.e. not yet printed) print jobs are executed in step 46a, 46b, etc. After finishing the jobs, or if no jobs are present, the user is offered a set of workflow options in step 47, including optional functions such as printing old jobs that already have been printed before, cleanup functions, or performing scan jobs. For example a maintenance operator may have his own special mailbox with dedicated processing functions, e.g. for testing image quality. After performing one or more optional functions in steps 48a, 48b, etc, the workflow is terminated at step 49.

Note that the document processing workflow may include scanning a physical document entered in a scanner unit of the digital document processing apparatus at any time during the period that the workflow is activated for the user as identified. Vice versa, even if automatic scanning is started based on the status of the scanner unit, printing jobs from the accessed logical storage space may be started simultaneously. For example the user may first execute print jobs, and later enter original documents to be scanned in the scanner unit.

In an embodiment the set of workflow options includes an authorization option for setting access rights of a different user. It is noted that in the workflow the user has selectively opened a logical storage space in step 44. The user may authorize a different user to access the opened logical storage space by giving an appropriate command at the user interface. Next the different user to be authorized has to enter a fingerprint at the fingerprint unit. Note that the authorized fingerprint may be anonymous, or may be of an existing user being already present in the user database. In the first case the fingerprint data of the different user is to be generated and included in the user database, while in the latter case the access rights of the existing user may be adapted.

A user may have access rights for accessing different logical storage spaces. The workflow may offer an option for accessing, according to the access rights of the user as identified, one of the logical storage spaces of an owner that is different from the user as identified. For example the user may have set a preferred logical storage space to be opened first. Other logical storage spaces may be offered for opening later in the set of workflow options in step 47.

Although the workflow may automatically include executing printing new jobs in one or more logical storage spaces, a selective printing option may be offered in the set of workflow options of step 47. The selective printing option may include executing a print job originating from a source that is different from the user as identified, e.g. by entering a specific print job number. Also a specific type of print jobs may be selected, e.g. a weekly worksheet or other forms. Furthermore, selecting a print job that has already been printed earlier, changing the settings of the print process such as setting a number of copies to be printed, or selecting an order of printing of print jobs may be included. The order of executing print jobs may be according to priority data included in the print jobs, or according to chronological or anti-chronological order of transferring the print jobs.

In an embodiment of the method the user database is organized to contain a number of different fingerprint data for different fingers of the user. The user database may just contain the different fingerprint data for use as a backup if the user is unable to use certain fingers. Hence in the steps 31 and 32 in Fig. 3 the same user will be identified even if a different finger is applied to the fingerprint unit. However, additionally, different sets of user preferences or access rights may be coupled to the different fingers. In a first example the respective fingers are coupled to specific workflows. This allows controlling the workflow at the document processing apparatus by selecting the appropriate finger. For example a specific finger may be set to print only the newest print job, whereas a different finger may be set to print all pending print jobs, or to print e-mails only. In a further example the respective fingers are coupled to specific access rights for different logical storage spaces. A first finger may be assigned access rights to the user's own logical storage space, whereas a different finger may be assigned access rights to the logical storage space of a different owner, e.g. a boss or colleague. Also a specific finger may be assigned access rights to a logical storage space owned by a department, or the company, or even a third party. The third party may be a commercial party, a health service, or the like. Hence said accessing one of the logical storage spaces is dependent on the selected finger.

For entering fingerprint data into the user database several procedures may be used. For example a special fingerprint unit may be coupled to a workstation or server station which is under the control of an administrator who manages the contents of the user database. The administrator may assign the respective access rights and user preferences to the respective fingers of a user after proper identification of the person involved. The user may also have the option of adding or changing some or all preferences or access rights, e.g. on his own workstation. He may for example authorize a different person to access some or all of his print jobs in his own logical storage space. A particular way of including a new user or additional fingerprint data is a follows.

In the case that a new user enters his fingerprint at the apparatus, steps 31 and 32 of Fig. 3 determine that this fingerprint does not match any fingerprint data in the user database, and the user is labeled as unknown. Subsequently, the apparatus displays or (optionally) prints a warning message, offering a retry option at the fingerprint unit or enlisting procedure for a new user. In addition, the apparatus may offer the option to print a user help message, e.g. a short manual explaining the functions of the fingerprint unit, or the procedure for new users. Hence an existing user will have the opportunity to re-enter his fingerprint. Alternatively, that user may access his logical storage space without using a finger print entry, but by selection from a list, possibly protected by a password.

If, on the other hand, the user selects the enlisting procedure shown in Fig. 3 as step 33, the apparatus requests him via a message on the display to enter his user identification data, e.g. by selecting his logical storage space from the list, if he has one, and enter his fingerprint at the fingerprint input unit. For reliably generating the fingerprint data, the apparatus may ask the user to enter his fingerprint a few additional times. Then, the apparatus enters the fingerprint data, together with the user identification data, in the user database.

Figure 5 shows an additional method of entering new fingerprint data in the user database, which especially suitable when the user database is accomodated in a remote computer/server. This method is also useful for storing fingerprint data in a workstation for an alternative embodiment of the invention as described above, wherein fingerprint data are embedded in a print job.

At step 50, at a server or a central facility or at the workstation of the user, hereinafter referred to as the "sending station", the process for entering a new user's fingerprint data is started . In step 51 user identification data is defined at the sending station, such as a user name. Step 51 may include setting user preferences for specific types of jobs, such a print or scan jobs. In a next step 52 a personal identification code and corresponding personal identification code verification data is generated by the sending station. For security reasons the link between the personal identification code and the personal identification code verification data may be via a cryptographical function. The user has to memorize the personal identification code, for example a 4 digit number. In a next step 53 the personal identification code verification data are transferred to the digital document processing apparatus, as a new user job, or included in a (first) print job. The user goes to the digital document processing apparatus and starts controlling the apparatus via the user interface, where he may immediately indicate that he wants to perform a new user process by selecting the appropriate new user job. Subsequently, in a step 54 the apparatus requests the user to enter the personal identification code and verifies the personal identification code based on the personal identification code data. If the personal identification code as entered corresponds to the personal identification code verification data as transferred, the apparatus requests the new user, in a step 55, to enter his fingerprint. Alternatively the apparatus may automatically detect a new fingerprint being entered, and subsequently offer the user the option to select the new user job and request entering the personal identification code. When the new fingerprint has been entered, the apparatus generates fingerprint data from the fingerprint entered, which fingerprint data is to be used later for matching new fingerprint entries of the respective user. For reliably generating the fingerprint data, the apparatus may ask the user to enter his fingerprint a few additional times. In a step 56 the fingerprint data is transmitted to the sending station, where it is stored in combination with the user data and possibly with further preferences or access rights as included in the new user job.

In an embodiment the control of the document processing includes a special secure printing option. The workflow includes, after being started by a first user, identifying a second user, in response to a second fingerprint from the second user at the fingerprint input unit. The second user is to be identified based on the second fingerprint and the user database. If so, a secure logical storage space is accessed according to combined access rights of both users as identified, and a workflow is initiated related to the secure logical storage space. Note that the secure logical storage space may contain confidential printing jobs that may only be distributed if the two users are both present at the printer. Alternatively to the secure logical storage space, the secure printing workflow may be initiated for a specific print job in a normal logical storage space, by adding user identification of a second user to be identified to the specific print job.

Although the invention has been mainly explained by embodiments in a company environment, e.g. for printing in a department, it is to be noted that the invention is also suitable for document processing on a different scale, such as the public commercial service, like a newspaper service or printing personal photographs on a color printer at a shop. It is noted, that in this document the use of the verb 'comprise' and its conjugations does not exclude the presence of other elements or steps than those listed and the word 'a' or 'an' preceding an element does not exclude the presence of a plurality of such elements, that any reference signs do not limit the scope of the claims, that the invention and every unit or means mentioned may be implemented by suitable hardware and/or software and that several 'means' or 'units' may be represented by the same item. Further, the scope of the invention is not limited to the embodiments, and the invention lies in each and every novel feature or combination of features described above.

## Claims

1. A method of controlling document processing in a networked system including
- a digital image reproduction device for document processing, said device having a local user interface unit including a fingerprint input unit,
- at least one user workstation, and
- a management unit for managing a dynamic set of logical storage spaces for digital image files, each storage space dedicated to a respective user of the system and being dynamically maintained for storing image files of that user,
the method comprising:
- processing documents in the digital image reproduction device, including storing a digital document in or retrieving a digital document from, a respective one of the logical storage spaces, in response to a user action at the local user interface unit of the device,
and being **characterized by**:
- detecting a user entering a fingerprint at the fingerprint input unit, and,
in response,
- identifying the user from the fingerprint entered,
- accessing one of the logical storage spaces in accordance with access rights of the user as identified, and
- automatically and without requiring any further user interaction initiating a document processing workflow related to said accessed logical storage space.

2. Method as claimed in claim 1, wherein the step of identifying a user includes looking up a user identification in a database of users, containing information for relating user fingerprints with user identifications.

3. Method as claimed in claim 1 or 2, also including:
creating a print job related to a digital document at a workstation,
- including, in the print job, a user identification,
- transferring the print job to the digital image reproduction device,
- storing the print job in a logical storage space dedicated to the user identification, and wherein said document processing workflow includes detecting the print job in the accessed logical storage space, and executing the print job in the digital image reproduction device.

4. Method as claimed in claim 3, wherein said document processing workflow includes automatically selecting print jobs in the accessed logical storage space, that have not yet been executed, and executing the selected print jobs in the digital image reproduction device.

5. Method as claimed in claim 1 or 2, wherein the document processing workflow includes scanning a physical document entered in a scanner unit of the digital image reproduction device and storing an image file generated in the scanning in the accessed logical storage space.

6. Method as claimed in claim 5, wherein the document processing workflow includes detecting a status of the scanner unit, the status indicating the presence of a physical document to be scanned, and subsequently scanning the document.

7. Method as claimed in claim 1, wherein the document processing workflow includes opening said accessed logical storage space on a display of the user interface of the digital sheet processing apparatus, and offering, via the user interface, a set of workflow options.

8. Method as claimed in claim 7, wherein the set of workflow options includes an authorize option for setting access rights of a different user to said accessed logical storage space on the user interface by entering a fingerprint of the different user at the fingerprint input unit.

9. Method as claimed in claim 7, wherein the set of workflow options includes an option for accessing, according to access rights of the user as identified, one of the logical storage spaces of user, other than the user as identified.

10. Method as claimed in claim 7, wherein the set of workflow options includes a selective printing option.

11. Method as claimed in claim 2, further comprising:
- detecting a second user entering a fingerprint at the fingerprint input unit, and, in response,
- identifying the second user from the fingerprint entered,
- accessing, according to combined access rights of the users as identified, a secure logical storage space, and
initiating a document processing workflow related to the secure logical storage space.

12. Method as claimed in claim 1 or 2, wherein one of several different document processing workflows is automatically selected and initiated in reaction to detection of fingerprints of different fingers of one user.

13. Method as claimed in claim 1 or 2, wherein one of several different logical storage spaces are accessed in reaction to detection of fingerprints of different fingers of one user.

14. Method as claimed in claim 2, further comprising:
- identifying a user as unknown upon his entering a fingerprint that does not match fingerprint data in the user database, and, subsequently,
- requesting the user to identify himself,
- storing fingerprint data based on the non-matching fingerprint in the user database.

15. Method as claimed in claim 1, further comprising the steps of:
- at a sending station, generating a personal identification code and personal identification code verification data for a user,
- transferring the personal identification code verification data to the digital image reproduction device,
- requesting, via the user interface of the digital image reproduction device, to enter the personal identification code, and
- if the personal identification code as entered corresponds to the personal identification code verification data as transferred, subsequently transferring fingerprint data based on a fingerprint of the user entered at the fingerprint input unit back to the sending station for storage.

16. Computer program product for controlling document processing, which program is operative to cause a processor to perform the method as claimed in any of the claims 1 to 15.

17. A document processing system comprising:
- a digital image reproduction device (1) for document processing, said device having a local user interface unit (13) including a fingerprint input unit (14),
- a management unit (12) for managing a dynamic set of logical storage spaces for digital image files, each storage space dedicated to a respective user of the system and being dynamically maintained for storing image files of that user,
said management unit (12) also being operative for controlling processing documents in the digital image reproduction device, including storing a digital document in or retrieving a digital document from, a respective one of the logical storage spaces, in response to a user action at the local user interface unit (13) of the device,
**characterized in that**
the management unit (12), in reaction to detecting a user entering a fingerprint at the fingerprint input unit:
- identifies the user from the fingerprint entered,
- accesses one of the logical storage spaces in accordance with access rights of the user as identified, and
- automatically and without requiring any further user interaction initiates a document processing workflow related to said accessed logical storage space.

18. System as claimed in claim 17,
also comprising a database unit (27) maintaining a database of users, containing information for relating user fingerprints with user identifications, wherein said management unit (12) identifies a user by consulting the database unit (27).

19. System as claimed in claim 17 or 18, wherein the digital image reproduction device includes a printer unit (4), and the management unit (12) is arranged for, in the document processing workflow, detecting a print job in the accessed logical storage space, and automatically executing the print job in the printer unit (4).

20. System as claimed in claim 17 or 18, wherein the digital image reproduction device includes a scanner unit (3), and the management unit (12) is arranged for, in the document processing workflow, scanning a physical document entered in the scanner unit (3) and storing the image file generated in the scanning in the accessed logical storage space.
